# EUROPÄISCHE PATENTSCHRIFT

(11) **EP 2 700 536 B1**
(45) Veröffentlichungstag und Bekanntmachung des Hinweises auf die Patenterteilung: **22.05.2024**
(21) Anmeldenummer: 13180226.6
(22) Anmeldetag: 13.08.2013
(51) Int. Cl.: B60Q 1/08, G08G 1/16

(54) **Verfahren zum Betreiben eines Scheinwerfersystems und Scheinwerfersystem für ein Fahrzeug**
Method for operating a headlamp system and headlamp system for a vehicle
Procédé de contrôle d'un système de phare et système de phare pour un véhicule

(30) Priorität: 23.08.2012 DE 102012016782
(43) Veröffentlichungstag der Anmeldung: 26.02.2014
(73) Patentinhaber: Volkswagen Aktiengesellschaft, 38440 Wolfsburg (DE)
(72) Erfinder: Wegwerth, Christian, 38448 Wolfsburg (DE); Thomschke, Sebastian, 38104 Braunschweig (DE); Gonter, Mark, 31275 Lehrte (DE); Grunert, Clemens, 38112 Braunschweig (DE)

(56) Entgegenhaltungen:
- EP-A1- 2 127 944
- EP-A2- 2 284 439
- DE-A1- 10 354 104
- DE-A1-102008 058 386
- DE-A1-102009 040 006
- US-A1- 2009 016 073
- Bmw-Actu: "BMW Dynamic Light Spot", , 30 May 2012 (2012-05-30), XP093020595, Retrieved from the Internet: URL:https://www.youtube.com/watch?v=ov1u1j d2Dbo [retrieved on 2023-02-03]

## Beschreibung

Die vorliegende Erfindung betrifft ein Verfahren zum Betreiben eines Scheinwerfersystems mit wenigstens einem Scheinwerfer in einem Fahrzeug sowie ein dazugehöriges Scheinwerfersystem. Bei dem erfindungsgemäßen Verfahren wird die Lichtverteilung in der Umgebung des Fahrzeugs erfasst und es wird das von dem wenigstens einen Scheinwerfer zu emittierende Lichtmuster zur Beleuchtung der Umgebung des Fahrzeugs in Abhängigkeit von der erfassten Lichtverteilung berechnet. Der wenigstens eine Scheinwerfer wird dann gemäß dem berechneten Lichtmuster gesteuert.

Scheinwerfersysteme zum Bereitstellen verschiedener Lichtfunktionen sind als solche bekannt. Die Lichtemission der Scheinwerfer solcher Scheinwerfersysteme sind steuerbar, sodass das auszusendende Lichtmuster variiert werden kann. Neben vom Fahrer manuell zu steuernden Lichtfunktionen, wie z.B. das manuelle Umschalten zwischen einem Abblendlicht und einem Fernlicht, sind auch automatisch regelbare Lichtfunktionen bekannt, bei denen in Abhängigkeit von Fahrzeuginformationen die Scheinwerfer automatisch geregelt werden. Auf diese Weise kann das von den Scheinwerfern zu emittierende Lichtmuster an den voraus liegenden Streckenabschnitt, die Verkehrssituation, die Lichtverhältnisse und die Wetterbedingungen angepasst werden, um die Sicht des Fahrers zu verbessern und ggf. die Blendung anderer Verkehrsteilnehmer zu vermeiden. Das Lichtmuster wird z.B. als Kurvenlicht in Abhängigkeit vom Lenkwinkel oder einem erfassten vorausliegenden Kurvenabschnitt angepasst.

Die DE 10 2007 009 895 A1 beschreibt ein Fahrzeugsteuergerät, mit welchem verschiedene Situationen erfassbar sind und verschiedenen Fahrzeugeinheiten situationsabhängig steuerbar sind. Dazu wird ein Modell gespeichert, welches eine Zuordnung zwischen die Situation anzeigenden Variablen und das Vorhandensein oder das Fehlen von Betriebserfordernissen für die jeweilige Fahrzeugeinheit darstellt. Beispielsweise kann situationsabhängig erkannt werden, dass es erforderlich ist, das Licht des Fahrzeugs einzuschalten, z.B. indem mittels eines Sensors die Helligkeit des Außenbereichs oder Niederschlags erfasst wird.

Die typischerweise auf und entlang einer Straße liegenden Objekte weisen sehr unterschiedliche Reflexionsvermögen bzw. Absorptionsverhalten von Licht auf. Bäume am Wegrand absorbieren relativ viel Licht. Der Straßenbelag hat ein variables Reflexionsvermögen, je nachdem ob er nass oder trocken ist. Am Straßenrand gibt es stark reflektierende Objekte wie z.B. Verkehrsschilder. Ferner werden die Helligkeitsunterschiede in der Lichtverteilung vor einem Fahrzeug durch Fremdlichtquellen beeinflusst, z.B. durch Lichtquellen anderer Fahrzeuge oder durch Straßenlaternen. Heller leuchtende oder beleuchtete Bereiche im Sichtfeld des Fahrers eines Fahrzeugs können dabei von dunklen, potentiell kritischen Objekten, z.B. unbeleuchteten Hindernissen oder kreuzenden Fußgängern, ablenken.

Die DE 10 2009 040 006 A1 beschreibt eine Scheinwerferanordnung und ein Verfahren zum Steuern derselben, bei der die Beleuchtung einer Szene vor dem Fahrzeug in Abhängigkeit von der Helligkeit gesteuert werden kann. Dazu werden insbesondere lokale Helligkeitsextrema mittels Bildsensoren, z.B. einer CMOS-Kamera, erfasst und die Beleuchtung derart gesteuert, dass Gegenmaßnahmen zur Kompensation der Ungleichmäßigkeit eingeleitet werden. Die zeitliche Veränderung der Beleuchtungssituation kann ebenfalls berücksichtigt werden, indem bei einem Blickwechsel des Fahrers oder bei bzw. nach einer erfolgten Blendung die Ausleuchtung der Szene in ihrer Intensität angepasst wird. Bei der Analyse der Beleuchtungssituation kann dabei auch zwischen Fremdlicht und reflektiertem Eigenlicht unterschieden werden.

Die DE 10 2008 058 386 A1 beschreibt ein Verfahren zur Ansteuerung eines Fahrzeugscheinwerfers, bei dem im Umfeld eines Fahrzeugs Objekte erkannt und individuell beleuchtet werden. Die Beleuchtung erfolgt dabei in Abhängigkeit von einer den Objekten zugeordneten Gefahrenklasse.

In der DE 103 54 104 A1 wird ein Verfahren zur Steuerung der Ausleuchtung eines seitlichen Fahrbahnbereichs mittels eines Hilfsscheinwerfers für ein Fahrzeug beschrieben. Es werden Fußgänger im Umfeld des Fahrzeugs erkannt und die Wahrscheinlichkeit für einen Unfall wird ermittelt. Der Hilfsscheinwerfer beleuchtet dann den Fußgänger, wobei Bereiche ausgeblendet werden, in denen andere Verkehrsteilnehmer geblendet werden.

Die EP 2 284 439 A2 beschreibt einen Frontscheinwerfer eines Kraftfahrzeugs mit einer Markierungslichtfunktion. Mit dieser Lichtverteilung können Gefahrenobjekte, die im räumlichen Vorfeld des Kraftfahrzeugs detektiert werden, gezielt angestrahlt und dadurch mit besonders hellem Licht markiert werden.

Es ist die Aufgabe der vorliegenden Erfindung, ein Verfahren und ein Scheinwerfersystem der eingangs genannten Art bereitzustellen, welche die individuelle Sicht des Fahrers situationsgerecht verbessert und einen Beitrag zur Vermeidung von Unfällen oder Kollisionen leistet.

Diese Aufgabe wird erfindungsgemäß durch ein Verfahren mit den Merkmalen des Anspruchs 1 sowie durch ein Scheinwerfersystem mit den Merkmalen des Anspruchs 6 gelöst. Vorteilhafte Aus- und Weiterbildungen ergeben sich aus den abhängigen Ansprüchen.

Bei dem erfindungsgemäßen Verfahren werden Informationen bezüglich der Verkehrssituation in der Umgebung des Fahrzeugs erfasst, die Verkehrssituation wird einer Kritikalitätsklasse zugeordnet und das von dem wenigstens einen Scheinwerfer zu emittierende Lichtmuster wird in Abhängigkeit von der zugeordneten Kritikalitätsklasse angepasst. Eine Kritikalitätsklasse umfasst dabei die Bewertung der Verkehrssituation bezüglich der Verkehrsgefahren, insbesondere solcher Verkehrsgefahren, die durch nicht optimale Lichtverhältnisse entstehen oder verschärft werden, z.B. aufgrund schlechter Sicht zu spät gesehene Hindernisse. Die Anpassung des zu emittierenden Lichtmusters an die jeweilige Verkehrssituation kann dabei einen Beitrag leisten, dass der Fahrer intuitiv den Grad der Verkehrsgefährdung erkennt und, falls eine erhöhte Verkehrsgefährdung existiert, hierzu selektiv die Sicht verbessert wird.

Zur Berechnung des Lichtmusters wird vorteilhafterweise zunächst die momentane individuelle Lichtverteilung aus der Sicht des Fahrers berechnet, das heißt die aus der Position und aus dem Blickwinkel des Fahrers wahrnehmbare Lichtverteilung. Die nun zusätzlichen Ausleuchtmaßnahmen durch die Scheinwerfer werden dann in Abhängigkeit von der individuellen Sicht des Fahrers und der Kritikalitätsklasse der erfassten Verkehrssituation abgeleitet.

Bei dem erfindungsgemäßen Verfahren wird in der Umgebung des Fahrzeugs eine inhomogene Lichtverteilung mit Bereichen unterschiedlicher Lichtstärke erfasst. Das von dem wenigstens einen Scheinwerfer emittierte Lichtmuster umfasst dann ein Basis-Lichtmuster, mit welchem die Lichtverteilung homogenisiert wird. Das Basis-Lichtmuster kann dabei ggf. unabhängig von der Verkehrssituation berechnet und erzeugt werden und es kann insbesondere von Zusatz-Lichtmustern überlagerbar sein. Das Homogenisieren des Basis-Lichtmusters kompensiert in jedem Fall besonders hell und besonders gering ausgeleuchtete Bereiche, sodass dem Fahrer eine konstante oder zumindest konstantere Kontrastwahrnehmung als zuvor ermöglicht wird.

Eine Homogenisierung der Lichtverteilung ist ein Nivellieren bzw. Kompensieren von Lichtstärkedifferenzen in der Lichtverteilung im Umfeld des Fahrzeugs. Eine vollständige Homogenisierung mit gleicher Lichtstärke ist dabei in der Praxis kaum zu erreichen. Durch eine Homogenisierung kann jedoch erreicht werden, dass die Lichtemission des wenigstens einen Scheinwerfers in Richtung besonders schlecht ausgeleuchteter Bereiche erhöht wird und in Richtung stark reflektierender Bereiche erniedrigt wird. Ferner kann im Falle von Blendung durch eine fremde Lichtquelle die Lichtstärke insgesamt leicht angehoben werden.

Wird die Verkehrssituation einer niedrigen Kritikalitätsklasse, mit der keine besonderen Verkehrsgefahren assoziiert sind, zugeordnet, so wird gemäß einer Ausführungsform des erfindungsgemäßen Verfahrens bei der Homogenisierung der Lichtverteilung die Lichtemission für Bereiche überproportionaler Lichtstärke der Lichtverteilung in der Umgebung reduziert. Dabei wird der wenigstens eine Scheinwerfer mit reduzierter Energiezufuhr betrieben. Eine solche Maßnahme ist besonders sinnvoll für gut ausgeleuchtete Streckenabschnitte, bei der die eigene Fahrzeugbeleuchtung weniger zum aktiven Sehen als zum passiven Gesehenwerden benötigt wird. Dies spart einerseits Energie, andererseits ist es unter Umständen vorteilhaft, bei z.B. Nachtfahrten durch hell erleuchtete Straßenzüge die Augen des Fahrers nicht zu lange an eine Helligkeit zu gewöhnen, die für die Verkehrssicherheit nicht erforderlich ist. Bei Eintritt des Fahrzeugs in schlechter beleuchtete Streckenabschnitte müssten sich dann die Augen des Fahrers stärker an die Dunkelheit adaptieren.

Wird die Verkehrssituation einer hohen Kritikalitätsklasse, mit der eine erhöhte Verkehrsgefahr assoziiert wird, zugeordnet, so wird bei dem erfindungsgemäßen Verfahren ein räumlich und/oder zeitlich inhomogenes Lichtmuster erzeugt, das in der Lichtverteilung eine bereichsweise und/oder zeitweise erhöhte Lichtstärke besitzt. Wird zuvor ein obengenanntes Basis-Lichtmuster berechnet, so wird zusätzlich ein Zusatz-Lichtmuster berechnet, das dem Basis-Lichtmuster überlagert wird. Auf diese Weise kann ein Bereich von besonderer Relevanz stärker ausgeleuchtet werden, sodass einerseits die Aufmerksamkeit des Fahrers auf diesen Bereich gelenkt wird, andererseits dieser Bereich besser zu sehen ist. Das Lichtmuster kann in einem solchen Bereich erhöhter Lichtstärke aber auch unabhängig davon beispielsweise in der Helligkeit ansteigen, pulsieren oder blinken, wodurch andere Verkehrsteilnehmer kurzfristig gewarnt werden können. Vorteilhafterweise wird die Lichtstärke des Lichtmusters wenigstens für einen Winkelbereich des Lichtaustritts mit einer Wiederholungsfrequenz in einem Bereich zwischen 1Hz und 10Hz, vorzugsweise zwischen 3Hz und 5Hz, verändert. Wie Tests ergeben haben, sind solche Frequenzen in Gefahrensituationen besonders gut und schnell wahrnehmbar und stellen somit eine wirksame Warnung für andere Verkehrsteilnehmer dar.

Um durch die angepasste Lichtverteilung eine Beeinträchtigung anderer Verkehrsteilnehmer möglichst gering zu halten, wird, wenn die Gegenwart eines anderen Verkehrsteilnehmers in der Umgebung des Fahrzeugs erfasst wird, der Winkelbereich des Lichtaustritts mit erhöhter Lichtstärke so ausgerichtet, dass eine Blendung des anderen Verkehrsteilnehmers vermieden wird. Beispielsweise wird die Position und die Bewegung eines entgegenkommenden Fahrzeugs erfasst und das Zusatz-Lichtmuster vertikal scharf auf eine Höhe begrenzt, die unterhalb der Position des Fahrers des entgegenkommenden Fahrzeugs liegt. Ein Fußgänger wird mit einem solchen Zusatz-Lichtmuster insbesondere nur unterhalb der Hüfte angeleuchtet.

Einer Verkehrssituation wird typischerweise dann einer hohen Kritikalitätsklasse zugeordnet, wenn bestimmte Informationen bezüglich eines Gegenstands oder eines anderen Verkehrsteilnehmers in der Umgebung des Fahrzeugs erfasst werden. Der andere Verkehrsteilnehmer kann, muss aber nicht, ein solcher zuvor genannter Verkehrsteilnehmer sein, für den der Winkelbereich des Lichtaustritts mit erhöhter Lichtstärke so ausgerichtet wird, dass eine Blendwirkung vermieden wird.

Die Informationen umfassen beispielsweise, dass sich der betreffende Gegenstand bzw. der andere Verkehrsteilnehmer als solches in einem Abstand unterhalb eines bestimmten Grenzwerts vom eigenen Fahrzeug oder der zu fahrenden Fahrzeugtrajektorie befindet. Die Information kann auch die Bewegung des anderen Verkehrsteilnehmers umfassen, z.B. die Bewegungsrichtung eines die Fahrbahn kreuzenden Fußgängers. Auf diese Weise können die Informationen typisiert werden, d.h. bestimmten Gefahrensituationen zugeordnet werden. Eine passende Zuordnung ist wichtig, um dem Fahrer stets ein angemessen angepasstes Lichtmuster bereitzustellen. Der Fahrer wird so zum richtigen Zeitpunkt, aber nicht unnötig häufig in Alarmbereitschaft gesetzt.

Die individuelle Sicht des Fahrers wird erfindungsgemäß weiter verbessert, indem die zeitliche Entwicklung der Lichtverteilung in der Umgebung des Fahrzeugs und die Blickrichtung des Fahrers erfasst wird und bei der Berechnung des Lichtmusters berücksichtigt wird. Das Lichtmuster wird also vorzugsweise in Abhängigkeit von der Entwicklung der Lichtverteilung und/oder der Blickrichtung angepasst, damit der Adaption der Augen des Fahrers Rechnung getragen wird. Insbesondere kann während eines Ereignisses, durch das der Fahrer durch eine externe Lichtquelle geblendet wurde, die Lichtemission allgemein oder teilweise etwas erhöht werden. Bei einem Blickwechsel des Fahrers, z.B. beim Passieren einer Weggabelung oder Einmündung, kann die Lichtemission z.B. leicht reduziert werden, wenn der Fahrer nach einem Schulterblick in den geringer ausgeleuchteten Seitenbereich des Fahrzeugs seinen Blick wieder in den besser beleuchteten vorausliegenden Streckenabschnitt richtet.

Die Informationen bezüglich der Verkehrssituation in der Umgebung des Fahrzeugs können auf diverse Art und Weise erfasst werden. Sie werden insbesondere über im Fahrzeug angeordnete Sensoren, die z.B. mittels Infrarot-Strahlung oder RADAR (Radio Detecting and Ranging) arbeiten, über Mitteilungen von anderen Verkehrsteilnehmern, z.B. über eine Fahrzeug-zu-Fahrzeug-Schnittstelle, und/oder über Mitteilungen von Verkehrs-Infrastruktureinrichtungen erfasst. Verkehrs-Infrastruktureinrichtungen umfassen im weiteren Sinne Navigationssysteme inkl. GPS (Global Positioning System), Verkehrsfunkeinrichtungen, über Mobilfunk angebundene Server oder Verkehrsleit- und Informationssysteme, die z.B. in Ampeln oder Warnbaken am Straßenrand integriert sind.

Das erfindungsgemäße Scheinwerfersystem für ein Fahrzeug umfasst wenigstens einen Scheinwerfer, dessen Lichtemission gemäß einem berechneten Lichtmuster steuerbar ist, eine Lichtverteilungserfassungseinheit, mittels der die Lichtverteilung in der Umgebung des Fahrzeugs erfassbar ist und eine mit der Lichtverteilungserfassungseinheit verbundene Recheneinheit zum Berechnen des von dem wenigstens einen Scheinwerfer zu emittierenden Lichtmusters zur Beleuchtung der Umgebung des Fahrzeugs in Abhängigkeit von der erfassten Lichtverteilung. Das Scheinwerfersystem umfasst des Weiteren eine mit der Recheneinheit verbundene Steuereinheit zum Steuern des wenigstens einen Scheinwerfers gemäß dem berechneten Lichtmuster. Das erfindungsgemäße Scheinwerfersystem ist dadurch gekennzeichnet, dass das Scheinwerfersystem des Weiteren eine Verkehrssituationserfassungseinrichtung umfasst, mittels der Informationen bezüglich der Verkehrssituation in der Umgebung des Fahrzeugs erfassbar sind und die Verkehrssituation einer Kritikalitätsklasse zuordenbar ist, und dass mittels der Steuereinheit das von dem wenigstens einen Scheinwerfer zu emittierende Lichtmuster in Abhängigkeit von der zugeordneten Kritikalitätsklasse anpassbar ist. Das erfindungsgemäße Scheinwerfersystem ist insbesondere geeignet zum Durchführen des erfindungsgemäßen Verfahrens zum Betreiben des Scheinwerfersystems. Es weist somit auch die Vorteile des erfindungsgemäßen Verfahrens auf.

Der wenigstens eine Scheinwerfer kann ein an sich bekannter Scheinwerfer sein, dessen Lichtemission prinzipiell steuerbar ist. Es können vorteilhafterweise LED-Scheinwerfer (LED = Light Emitting Diode) oder Matrix-Scheinwerfer verwendet werden, die mehrere separat steuerbare Lichtquellen umfassen, die in unterschiedliche Winkelbereiche abstrahlbar sind. LEDs haben hier den besonderen Vorteil, dass die von ihnen emittierte Lichtstärke nahezu stufenlos regelbar ist und dass ein Blinken mit einer Frequenz im einstelligen Hertzbereich technisch problemlos und kostengünstig machbar ist.

Alternativ oder auch zusätzlich kann der wenigstens eine Scheinwerfer auch eine Halogenlichtquelle umfassen, deren Lichtemission mittels einer Strukturblende in verschiedener Weise veränderbar ist. Es sind z.B. Blendenanordnungen mit zwei oder mehreren Blenden bekannt, mittels denen ein Hell-Dunkelbereich variabel einstellbar ist. Es sind auch drehbare Walzenblenden bekannt, bei denen je nach Drehwinkel der Walze eine unterschiedliche Abstrahlcharakteristik erzielt werden kann. Eine Blendenanordnung mit einer oder mehreren Blenden kann dabei vorteilhafterweise mit einer vertikal und/oder horizontal verstellbar oder verschwenkbarer Lichtquelle kombiniert werden. Schließlich kann der Scheinwerfer auch z.B. eine Kombination aus einer Halogenlichtquelle und LEDs umfassen.

Erfindungsgemäß ist ein Kraftfahrzeug mit einem solchen Scheinwerfersystem ausgestattet.

Die Erfindung wird nun Anhand von Ausführungsbeispielen mit Bezug zu den Figuren näher erläutert.
- Figur 1: zeigt schematisch den Aufbau eines Scheinwerfersystems gemäß einem Ausführungsbeispiel der Erfindung,
- Figur 2: zeigt ein Flussdiagramm des Verfahrensablaufs zum Steuern der Lichtemission eines Scheinwerfersystems gemäß einem Ausführungsbeispiel der Erfindung,
- Figur 3: zeigt eine initiale Lichtverteilung mit Bereichen stark unterschiedlicher Lichtstärke,
- Figur 4: zeigt, wie durch eine Anpassung des emittierten Lichtmusters die Lichtverteilung aus der Figur 3 homogenisiert wurde, und
- Figur 5: zeigt mehrere Verkehrssituationen, für die gemäß einem Ausführungsbeispiel der Erfindung das zu emittierende Lichtmuster angepasst wurde.

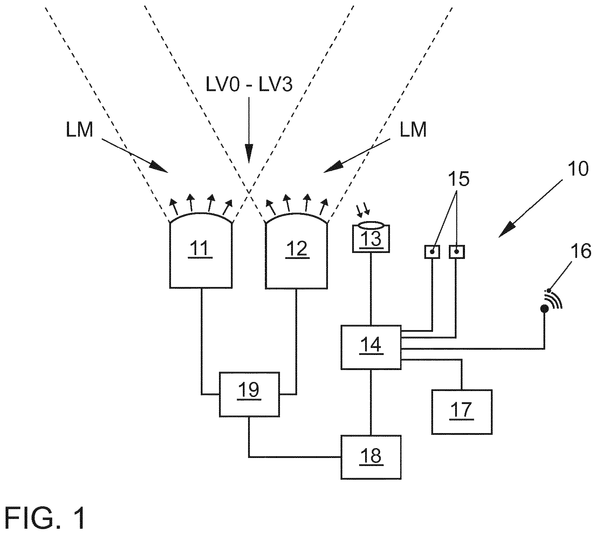

In der Figur 1 ist schematisch der Aufbau eines Scheinwerfersystems 10 für ein Fahrzeug gemäß einem Ausführungsbeispiel der Erfindung dargestellt. Ein solches Scheinwerfersystem 10 ist insbesondere für alle Straßenfahrzeuge geeignet. Das gezeigte Scheinwerfersystem 10 umfasst zwei Scheinwerfer 11, 12 und ist für den Einsatz für einen Personenkraftwagen oder Lastkraftwagen vorgesehen. In anderen Ausführungsvarianten kann das Scheinwerfersystem mehrere oder auch nur einen Scheinwerfer umfassen, letzteres z.B. zur Verwendung für ein Zweirad.

Die Lichtemission der Scheinwerfer 11, 12 ist gemäß einem berechneten Lichtmuster LM durch eine Steuereinheit 19 steuerbar. Die Scheinwerfer 11, 12 umfassen beispielsweise jeweils eine Vielzahl von Lichtquellen, die in bestimmte Raumwinkelbereiche Licht emittieren können und separat in ihrer Lichtstärke steuerbar sind. Die Scheinwerfer 11, 12 umfassen dazu beispielsweise mehrere LEDs (Light Emitting Diode), deren Energiezufuhr jeweils einzeln regelbar ist. LEDs haben in diesem Zusammenhang den Vorteil, dass das von ihnen emittierte Licht quasi stufenlos und ohne nennenswerte Zeitverzögerung einstellbar ist. Das zu emittierende Lichtmuster LM kann somit nicht nur schnell an die Erfordernisse angepasst werden, sondern es können auch ohne technische Schwierigkeiten sich wiederholende Lichtmuster LM erzeugt werden. Ferner sind LEDs nicht nur im Betrieb energiesparend, sondern es kann durch die stufenlose Regelung bei reduzierter Lichtemission sogar weiter Energie eingespart werden.

Die Scheinwerfer 11, 12 umfassen alternativ oder auch zusätzlich je eine Halogenlampe, z.B. eine Xenonlampe, deren Lichtemission jeweils durch eine oder mehrere elektromechanisch verstellbare Blende(n) veränderbar ist. Die Halogenlampen können des weiteren horizontal und/oder vertikal verschwenkbar sein, sodass auch hierdurch eine Anpassung des zu emittierenden Lichtmusters LM erreicht werden kann.

Ein im Fahrzeug installiertes Kameramodul 13 nimmt zeitaufgelöste Bilddaten von der Umgebung, insbesondere im vorausliegenden Streckenabschnitt des Fahrzeugs auf. Die zeitaufgelösten Bilddaten sind geeignet, um daraus die Lichtverteilung LV0 - LV3 in der Umgebung des Fahrzeugs zu bestimmen und Informationen bezüglich der Verkehrssituation in der Umgebung des Fahrzeugs zu erfassen. Das Kameramodul 13 ist beispielsweise ein CMOS-Kameramodul (CMOS = Complementary Metal Oxide Semiconductor), welches im oberen Bereich der Windschutzscheibe am Dachhimmel befestigt ist. Die vom Kameramodul 13 erfassten Bilddaten werden sodann an eine Verkehrssituationserfassungseinrichtung 14 und an eine Recheneinheit 18 weitergeleitet.

Es sei hier noch angemerkt, dass sich die Lichtverteilung LV0 - LV3 in der Regel kontinuierlich ändert. Das liegt daran, dass sich einerseits das Fahrzeug fortbewegt, wodurch sich das Reflexionsverhalten im vorausliegenden Streckenabschnitt ggf. ändert. Zum anderen wird die momentane Lichtverteilung LV0 - LV3 auch durch sich zeitlich ändernde Fremdlichtquellen beeinflusst. Lichtverteilungen LV0 beziehen sich auf beliebige Lichtverteilungen, Lichtverteilungen LV1 - LV3 sind auf eine entsprechende Situation angepasste Lichtverteilungen im Sinne der Erfindung. Bei unverändertem von den Scheinwerfern 11, 12 emittierten Lichtemuster LM werden die angepassten Lichtverteilungen LV1 - LV3 aber im Laufe der Zeit in eine beliebige Lichtverteilung LV0 verändert und müssen durch ein wiederum geändertes Lichtmuster LM nachjustiert werden.

In der Verkehrssituationserfassungseinrichtung 14 werden die Bilddaten hinsichtlich Informationen bezüglich der Verkehrssituation in der Umgebung des Fahrzeugs analysiert. Dazu werden Informationen aus den Bilddaten extrahiert, die Hinweise liefern auf die Gegenwart von anderen Verkehrsteilnehmern, insbesondere Fußgängern und Radfahrern, aber auch auf die Existenz von Objekten oder z.B. Tieren auf oder am Rand der Fahrbahn. Durch die differentielle Analyse der zeitaufgelösten Bilddaten können ferner Bewegungen solcher Verkehrsteilnehmer oder Objekte ermittelt werden. Je nach Analyseergebnis wird die jeweilige Verkehrssituation einer Kritikalitätsklasse zugeordnet. Wird aus den Informationen keine besondere Verkehrsgefahr abgeleitet, z.B. wenn die Fahrbahn und der Straßenrand frei sind, so wird die Verkehrssituation einer niedrigen Kritikalitätsklasse zugeordnet. Werden andererseits Personen oder Objekte erfasst, deren Bewegungsrichtung in die Fahrttrajektorie des eigenen Fahrzeugs zeigt, wird eine hohe Kritikalitätsstufe zugeordnet.

Die Verkehrssituationserfassungseinrichtung 14 greift auf eine Reihe weiterer Informationen und Daten zurück. Sie erfasst weitere Informationen zur Verkehrssituation über Umfeldsensoren 15, mittels derer z.B. Hindernisse im Fahrbahnumfeld erfassbar sind. Über eine Funkschnittstelle 16 können Informationen von anderen Fahrzeugen (sogenannte Car-to-Car-Kommunikation), Verkehrseinrichtungen, z.B. Ampeln, oder über Verkehrsdienste empfangen werden. Weitere Informationen, z.B. Streckeninformationen des vorausliegenden Streckenabschnitts oder Stauinformationen, werden von einem angeschlossenen Navigationssystem 17 empfangen.

Das Analyseergebnis der Verkehrssituationserfassungseinrichtung 14, insbesondere die Kritikalitätsklasse der jeweiligen Verkehrssituation, wird an die Recheneinheit 18 übermittelt.

In der Recheneinheit 18 werden die Bilddaten des Kameramoduls 13 bezüglich der Lichtverteilung LV0 ausgewertet und unter Berücksichtigung der Kritikalitätsklasse wird eine neu zu erreichende Lichtverteilung LV1 - LV3 ermittelt. Aus Inhomogenitäten in der erfassten Lichtverteilung LV0 kann dabei auf Fremdlichtquellen und Reflexionen geschlossen werden.

Die zu erreichende Lichtverteilung LV1 - LV3 simuliert dabei die Umgebung des Fahrzeugs so, wie sie aus Sicht des Fahrers in der jeweiligen Situation individuell wahrgenommen wird. Dabei wird unter anderem auch die Hell-Dunkel-Adaption der Augen des Fahrers berücksichtigt und durch die zu erreichende Lichtverteilung LV1 - LV3 entsprechend kompensiert. Es wird dazu beispielsweise die zeitliche Veränderung der Helligkeit des Punktes, den der Fahrer gerade fokussiert, oder eine Blickwendung des Fahrers aus einer ersten Blickrichtung in eine zweite, unterschiedlich hell wirkende Blickrichtung erfasst.

Aus der zu erreichenden Lichtverteilung LV1 - LV3 gegenüber der erfassten Lichtverteilung LV0 werden Daten für das neu zu emittierende Lichtmuster LM zur Beleuchtung der Umgebung des Fahrzeugs in Abhängigkeit von der erfassten Lichtverteilung LV0 berechnet. Ferner muss auch bei einer Änderung der Kritikalitätsklasse das Lichtmuster LM angepasst werden, wenn ein bis dahin angepasstes Lichtmuster LV1 - LV3 durch ein anderes zu erreichendes Lichtmuster LV1 - LV3 ersetzt werden soll.

Die Steuereinheit 19 empfängt die Daten bezüglich des zu emittierenden Lichtmusters LM von der Recheneinheit 18 und setzt diese in die dazugehörigen Steuerbefehle zum Steuern der Scheinwerfer 11, 12 um.

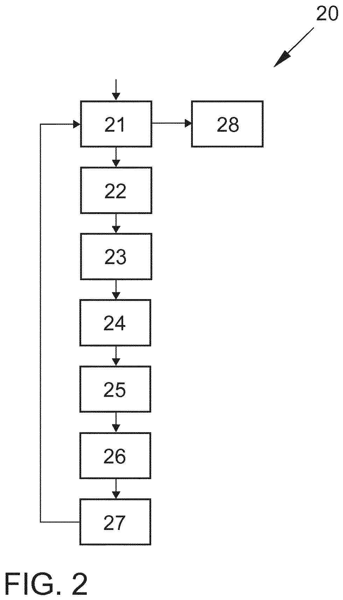

Das erfindungsgemäße Verfahren wird nun anhand eines Ausführungsbeispiels mit Bezug zu den Figuren 2 bis 5 näher erläutert. Dazu kann insbesondere das mit Bezug zu der Figur 1 beschriebene Scheinwerfersystem 10 verwendet werden, auf das sich im folgenden auch bezogen wird.

In der Figur 2 ist ein Flussdiagramm 20 des Verfahrensablaufs zum Steuern der Lichtemission des Scheinwerfersystems 10 gemäß einem Ausführungsbeispiel der Erfindung dargestellt. Das Verfahren wird in einem Schritt 21 initialisiert, indem das Einschalten der durch das erfindungsgemäße Verfahren bereitgestellten Lichtfunktion erfasst wird. Die Lichtfunktion kann automatisch beim Einschalten der Scheinwerfer 11, 12 aktiviert werden. Sie kann auch separat aktivierbar bzw. ausschaltbar sein, nachdem die Scheinwerfer 11, 12 eingeschaltet worden sind.

Im Schritt 22 wird die Lichtverteilung LV0 in der Umgebung des Fahrzeugs erfasst, insbesondere in dem vorausliegenden Streckenabschnitt, der durch die Scheinwerfer 11, 12 beleuchtet wird bzw. prinzipiell von den Scheinwerfern 11, 12 beleuchtbar ist. Dazu werden insbesondere die von dem Kameramodul 13 erfassten Bilddaten ausgewertet.

Im Schritt 23 werden Informationen zur momentanen Verkehrssituation in der Umgebung des eigenen Fahrzeugs erfasst. Dazu werden die Bilddaten des Kameramoduls 13, die Daten der Umfeldsensoren 15 sowie eine Reihe weiterer verfügbarer Informationen zusammengeführt. Es werden insbesondere Mitteilungen von anderen Verkehrsteilnehmern und Mitteilungen von Verkehrs-Infrastruktureinrichtungen erfasst, z.B. Mitteilungen von Ampeln oder Verkehrsleitsystemen. Die Gesamtheit der verfügbaren Informationen werden zu einem Gesamtverkehrsbild zusammengesetzt und einer von mehreren vordefinierten Verkehrsstandardsituationen zugeordnet.

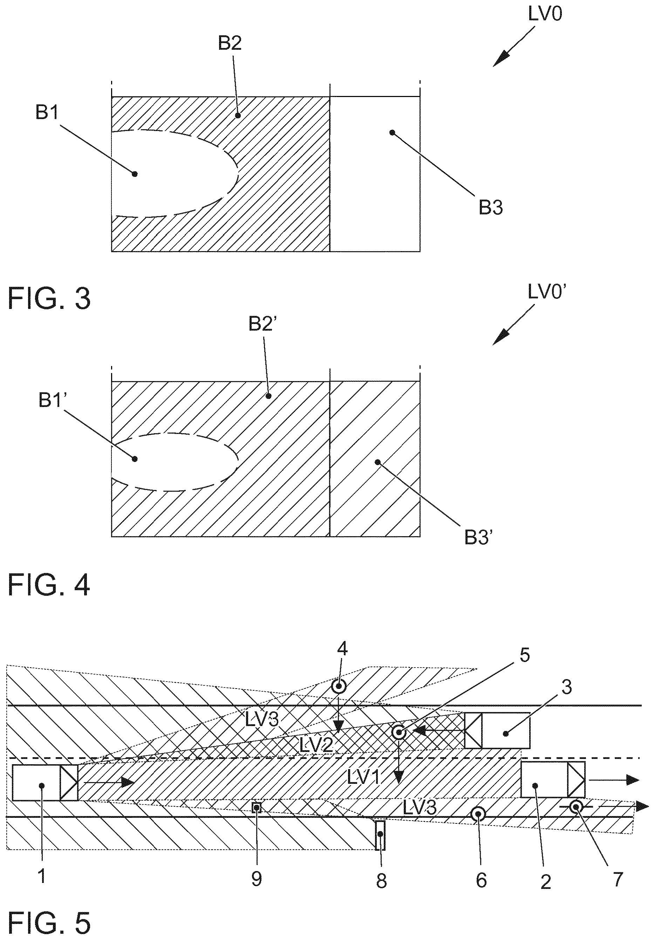

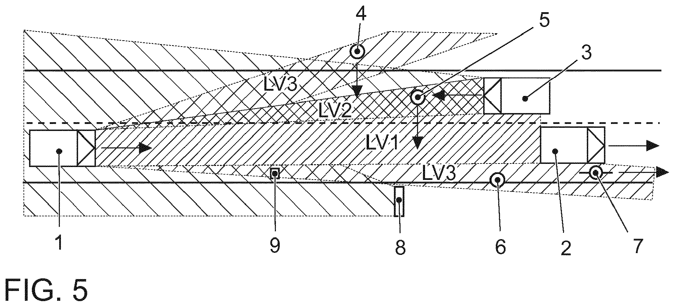

Je nachdem, welche und wie viele potentielle Gefahrenquellen identifiziert wurden, wird im Schritt 24 die Verkehrssituation einer Kritikalitätsklasse zugeordnet. Die Kritikalitätsklassen können dabei Eskalationsstufen steigender Unfallgefahr sein. Es können aber auch mehrere Kritikalitätsklassen mit ähnlicher oder gleicher Unfallgefahr vordefiniert werden. Eine mögliche Einteilung der Kritikalitätsklassen wird im Zusammenhang mit der Figur 5 diskutiert.

Jeder Kritikalitätsklasse wird ein Ziel-Lichtverteilung zugeordnet, durch die der Fahrer des Fahrzeugs möglichst gut auf die bestehende Verkehrssituation vorbereitet werden soll. Eine solche Ziel-Lichtverteilung wird insbesondere generisch vorgegeben und muss noch an die konkrete Situation angepasst werden. Sie ist insbesondere parametrisiert, d.h. sie muss die konkreten Parameter der Verkehrssituation im Umfeld des Fahrzeugs berücksichtigen, z.B. Abstand, Größe und Art eines Hindernisses auf der Fahrbahn. Basierend auf den Umfeldparametern, der erfassten Lichtverteilung LV0 und der bestimmten Kritikalitätsklasse wird die zu erreichende Lichtverteilung LV1 - LV3 in einem Schritt 25 berechnet. Insbesondere soll die zu erreichende Lichtverteilung LV1 - LV3 den Fahrer dahingehend unterstützen, dass dieser möglichst entspannt sehen kann und ggf. auf Gefahrenbereiche aufmerksam gemacht wird.

Im Schritt 26 wird aus der zu erreichenden Lichtverteilung LV1 - LV3 das von den Scheinwerfern 11, 12 zu emittierende Lichtmuster LM zur Beleuchtung der Umgebung des Fahrzeugs berechnet. Aus der zu erreichenden Lichtverteilung LV1 - LV3 werden also unter Berücksichtigung der Reflexionen und Fremdlichtquellen die Steuersignale zum Steuern der Scheinwerfer 11, 12 abgeleitet. Im Schritt 27 werden die Scheinwerfer 11, 12 schließlich gemäß dem berechneten Lichtmuster LM gesteuert. Es wird beispielsweise je nach Ausgestaltung der Scheinwerfer 11, 12 die Stellung der Blenden verändert und/oder einzelne LEDs, die in einen bestimmten Winkelbereich Licht emittieren, eingeschaltet, ausgeschaltet, gedimmt oder in anderer Weise in ihrer Lichtemission verändert, je nachdem wie das momentan zu emittierende Lichtmuster LM anzupassen ist.

Das Verfahren wird kontinuierlich fortgeführt, weil durch die Fahrt des Fahrzeugs, Fremdlichtquellen und Veränderungen der Verkehrssituation eine dynamische Anpassung der Lichtemission der Scheinwerfer 11, 12 notwendig ist. Dabei wird im Schritt 21 zunächst geprüft, ob die Scheinwerfer 11, 12 überhaupt noch eingeschaltet sind bzw. die Lichtfunktion noch aktiv ist. Ist dies der Fall, werden die Schritte 22 - 27 wiederholt, wobei ggf. die Scheinwerfer 11, 12 nachjustiert werden, andernfalls wird das Verfahren im Schritt 28 beendet.

In der Figur 3 ist ein Ausschnitt einer initialen Lichtverteilung LV0 dargestellt. Die Lichtverteilung LV0 weist aus der Sicht des Fahrers einen Bereich B1 mit stark erhöhter Lichtstärke auf, der aus der Reflexion der eigenen Scheinwerfer 11, 12 auf der Fahrbahn und ggf. durch die Blendung einer Fremdlichtquelle, z.B. von einem entgegenkommenden Fahrzeug, resultiert. Der umliegende Bereich B2 ist deutlich schlechter beleuchtet und erscheint dunkler. Der rechte Rand erscheint ebenfalls sehr hell, weil von hier viel Licht der eigenen Scheinwerfer 11, 12 von einem Verkehrsschild zum Fahrer zurück reflektiert wird.

In der Figur 4 ist dargestellt, wie aus der Lichtverteilung LV0 der Figur 3 durch eine Anpassung des von den Scheinwerfern 11, 12 emittierten Lichtmusters LM eine homogenisierte Lichtverteilung LV0' erreicht wird. Dabei wird die Lichtemission, die in Richtung der helleren Bereiche B1, B3 gerichtet ist, reduziert, sodass der Helligkeitskontrast zwischen den Bereichen B1', B3' einerseits und dem Bereich B2 andererseits weitgehend kompensiert wird. Dies ist insbesondere zu erreichen, wenn in den Scheinwerfern 11, 12 LED verwendet werden, deren Lichtemission proportional zur zugeführten Energie ist. Die Reduzierung der Lichtemission einzelner LEDs führt somit vorteilhafterweise zu einer Energieersparnis. Eine solche Lichtverteilung LV0' ist insbesondere dann sinnvoll, wenn der bestehenden Verkehrssituation zuvor eine niedrige Kritikalitätsklasse zugeordnet wurde. Das Fahrzeug befindet sich z.B. bei wenig Verkehr auf einer übersichtlichen Landstraße oder Autobahn, ohne dass potentielle Verkehrshindernisse erkannt wurden. Die homogenisierte Lichtverteilung LV0' eignet sich allgemein als Basis-Lichtverteilung, die durch eine situationsabhängig erforderliche ZusatzLichtverteilung überlagerbar ist.

In der Figur 5 sind mehrere Verkehrssituationen dargestellt, für die gemäß einem Ausführungsbeispiel der Erfindung das zu emittierende Lichtmuster LM angepasst wurde. Gezeigt ist das eigene Kraftfahrzeug 1, ein vorausfahrendes Fahrzeug 2 und ein entgegenkommendes Fahrzeug 3. Des Weiteren sind fiktive Positionen von Fußgängern 4 - 6, einem Radfahrer 7 und einem Objekt 9 am rechten Fahrbahnrand dargestellt. Für die Fußgänger 4, 5 wurde eine Bewegung erfasst, die auf das Überqueren der Fahrbahn hindeutet. Rechts neben der Fahrbahn befindet sich ein stark reflektierendes Verkehrsschild 8.

Die Verkehrssituationen werden in diesem Ausführungsbeispiel wenigstens vier verschiedenen Kritikalitätsklassen zugeordnet. Eine niedrige Kritikalitätsklasse NULL gilt für alle Verkehrssituationen, in denen keine erhöhte Verkehrsgefahr erkannt wurde. Es können dabei vorausfahrende Fahrzeuge 2 oder entgegenkommende Fahrzeuge 3 erfasst worden sein. Solange der Abstand zum vorausfahrenden Fahrzeug 2 keinen kritischen Grenzwert unterschreitet und die Fahrttrajektorie dieser Fahrzeuge 2, 3 "normal" verlaufen, d.h. insbesondere gemäß der vorgeschriebenen Fahrbahnen, ist hier von keiner erhöhten Verkehrsgefahr auszugehen. Die Anpassung des Lichtmusters LM beschränkt sich in diesem Fall auf eine Homogenisierung der Lichtverteilung LV0'.

Es sind drei weitere Standardverkehrssituationen definiert, denen hohe Kritikalitätsklassen I-1, I-2 bzw. I-3 zugeordnet werden. Für diese Fälle sind jeweils eine Anpassung des Lichtmusters LM zur Erzielung einer Lichtverteilung LV1 - LV3 vorgesehen. Die Kritikalitätsklassen I-1 bis I-3 sind hierbei nicht unbedingt als Eskalationsstufen zu verstehen. Sie spiegeln lediglich je ein spezifisches Gefahrenprofil wider, deren assoziierte Gefahren durch die eine spezifische Lichtverteilung LV1 - LV3 gemindert werden sollen. Die Lichtverteilungen LV1 - LV3 werden durch Überlagerungen der Lichtverteilungen LV0' mit einer entsprechenden Zusatzlichtverteilung erzeugt.

Für die Kritikalitätsstufe I-1 wurde ein hoher Helligkeitskontrast im Umfeld des eigenen Fahrzeugs 1 erfasst. Die Ursachen können eine blendende Fremdlichtquelle, starke Reflexionen oder stark absorbierende, d.h. schlecht sichtbare Objekte, z.B. das Objekt 9, sein. Das zu emittierende Lichtmuster LM wird in einem nach vorne ausgerichteten Winkelbereich räumlich begrenzt erhöht, wodurch die Lichtintensität auf der eigenen Fahrbahn selektiv angehoben wird und die Lichtverteilung LV1 erzeugt wird.

Für die Kritikalitätsstufe I-2 wurde erfasst, dass sich auf der Fahrbahn des Gegenverkehrs der Fußgänger 5 befindet und sich in Richtung der eigenen Fahrbahn bewegt. Das zu emittierende Lichtmuster LM wird daraufhin in einem Winkelbereich in Richtung des Fußgängers 5 erhöht, wodurch die Lichtintensität im Gefahrenbereich selektiv angehoben wird und die Lichtverteilung LV2 erzeugt wird. Um eine Blendung des Fußgängers 5 und gegebenenfalls eines entgegenkommenden Fahrzeugs 3 zu vermeiden, wird der Winkelbereich des Lichtaustritts mit erhöhter Lichtstärke horizontal und vertikal hart begrenzt, z.B. vertikal auf Hüfthöhe. Hierdurch behält der Fahrer des Fahrzeugs 1 nicht nur die Gefahrenquelle im Blick, sondern der Fußgänger 5 und der Fahrer des entgegenkommenden Fahrzeugs 3 werden durch den "Licht-Spot" zusätzlich gewarnt. Das zu emittierende Lichtmuster LM wird insbesondere bei einer solchen akuten Verkehrsgefährdung zeitlich pulsierend oder blinkend verändert. Der Licht-Spot wird z.B. mit einer zunehmenden Blinkfrequenz von 2Hz bis 5Hz moduliert, wodurch der Fußgänger 5 und der Fahrer des entgegenkommenden Fahrzeugs 3 noch besser gewarnt werden.

Für die Kritikalitätsstufe I-3 wurde bei ansonsten freier Fahrbahn am Fahrbahnrand die Existenz potentieller Gefahrenquellen erfasst. Es wurde z.B. am rechten Straßenrand ein Fußgänger 6, ein Radfahrer 7 und ein Objekt 9 und am linken Straßenrand ein Fußgänger 4 erkannt. Das zu emittierende Lichtmuster LM wird in die seitlichen Winkelbereiche ausgedehnt, wodurch die Lichtintensität am Straßenrand selektiv angehoben wird und die Lichtverteilung LV3 erzeugt wird. Wie zuvor mit Bezug zur Lichtverteilung LV2 beschrieben, wird dabei eine Blendung der anderen Verkehrsteilnehmer vermieden.

Im Sinne der Erfindung kann eine Vielzahl von Verkehrssituationen klassifiziert werden und eine entsprechend große Anzahl von Kritikalitätsklassen und dazugehörigen Ziel-Lichtverteilungen vordefiniert werden. Die genannten Maßnahmen sind dabei auch beliebig kombinierbar. Dies gilt sowohl für den Einsatz konkreter Scheinwerfer zur Emission spezifischer Lichtmuster LM, die eine beliebige Kombination aus Glühlampen, Halogenlampen und LEDs umfassen können, als auch für die Merkmale der Lichtverteilungen, die Homogenisierung, räumlich selektive Erhöhung der Lichtstärke sowie zeitliche Veränderung durch z.B. Blinken umfassen können.

### Bezugszeichenliste

- 1: eigenes Kraftfahrzeug
- 2: vorausfahrendes Kraftfahrzeug
- 3: entgegenkommendes Kraftfahrzeug
- 4 - 6: Fußgänger
- 7: Radfahrer
- 8: Verkehrsschild
- 9: Hindernis
- 10: Scheinwerfersystem
- 11, 12: Scheinwerfer
- 13: Kameramodul
- 14: Verkehrssituationserfassungseinrichtung
- 15: Umfeldsensoren
- 16: Funkschnittstelle
- 17: Navigationssystem
- 18: Recheneinheit
- 19: Steuereinheit
- 20: Flussdiagramm des Verfahrensablaufs
- 21: Lichtfunktion Ein
- 22: Erfassung der Lichtverteilung
- 23: Erfassung der Verkehrssituation
- 24: Zuweisung einer Kritikalitätsklasse
- 25: Berechnung der zu erreichenden Lichtverteilung
- 26: Berechnung des zu emittierenden Lichtmusters
- 27: Steuerung der Scheinwerfer
- 28: Lichtfunktion Aus
- LM: emittiertes Lichtmuster
- LV0 - LV3: Lichtverteilungen
- B1 - B3: Bereiche unterschiedlicher Lichtstärke
- B1' - B3': homogenisierte Bereiche

## Patentansprüche

1. Verfahren zum Betreiben eines Scheinwerfersystems (10) mit wenigstens einem Scheinwerfer (11, 12) in einem Fahrzeug (1), bei dem
- die Lichtverteilung (LVO) in der Umgebung des Fahrzeugs (1) erfasst wird,
- das von dem wenigstens einen Scheinwerfer (11, 12) zu emittierende Lichtmuster (LM) zur Beleuchtung der Umgebung des Fahrzeugs (1) in Abhängigkeit von der erfassten Lichtverteilung (LVO) berechnet wird und
- der wenigstens eine Scheinwerfer (11, 12) gemäß dem berechneten Lichtmuster (LM) gesteuert wird, wobei
- in der Umgebung des Fahrzeugs (1) eine inhomogene Lichtverteilung (LVO) mit Bereichen (B1 - B3) unterschiedlicher Lichtstärke erfasst wird,
- das von dem wenigstens einen Scheinwerfer (11, 12) emittierte Lichtmuster (LM) ein Basis-Lichtmuster umfasst, mit welchem die Lichtverteilung (LV0') homogenisiert wird, wobei eine Lichtemission des wenigstens einen Scheinwerfers (11, 12) in Richtung besonders schlecht ausgeleuchteter Bereiche im Umfeld des Fahrzeugs (1) erhöht wird und in Richtung stark reflektierender Bereiche erniedrigt wird, und
- Informationen bezüglich der Verkehrssituation in der Umgebung des Fahrzeugs (1) erfasst werden,
**dadurch gekennzeichnet, dass**
- die zeitliche Entwicklung der Lichtverteilung (LVO - LV3) in der Umgebung des Fahrzeugs (1) und die Blickrichtung des Fahrers erfasst wird und bei der Berechnung des Lichtmusters (LM) berücksichtigt wird,
- die Verkehrssituation einer Kritikalitätsklasse zugeordnet wird,
- das von dem wenigstens einen Scheinwerfer (11, 12) zu emittierende Lichtmuster (LM) in Abhängigkeit von der zugeordneten Kritikalitätsklasse angepasst wird, und,
- wenn die Verkehrssituation einer hohen Kritikalitätsklasse zugeordnet wird, mit der eine erhöhte Verkehrsgefahr assoziiert wird, ein Zusatz-Lichtmuster berechnet wird, das dem Basis-Lichtmuster überlagert wird, wobei ein räumlich und/oder zeitlich inhomogenes Lichtmuster (LM) erzeugt wird, das in der Lichtverteilung (LV1 - LV3) eine bereichsweise und/oder zeitweise erhöhte Lichtstärke besitzt.

2. Verfahren nach Anspruch 1,
**dadurch gekennzeichnet,**
**dass** die Lichtstärke des Lichtmusters (LM) wenigstens für einen Winkelbereich des Lichtaustritts mit einer Wiederholungsfrequenz in einem Bereich zwischen 1Hz und 10Hz, vorzugsweise zwischen 3Hz und 5Hz, verändert wird.

3. Verfahren nach Anspruch 1 oder 2,
**dadurch gekennzeichnet, dass**,
wenn ein anderer Verkehrsteilnehmer (2 - 7) in der Umgebung des Fahrzeugs (1) erfasst wird, der Winkelbereich des Lichtaustritts mit erhöhter Lichtstärke so ausgerichtet wird, dass eine Blendung des anderen Verkehrsteilnehmers (2 - 7) vermieden wird.

4. Verfahren nach einem der Ansprüche 1 bis 3,
**dadurch gekennzeichnet, dass**
die Verkehrssituation einer hohen Kritikalitätsklasse zugeordnet wird, wenn Informationen bezüglich eines Gegenstands (9) oder eines anderen Verkehrsteilnehmers (4 - 7) in der Umgebung des Fahrzeugs (1) erfasst werden.

5. Verfahren nach einem der vorangegangenen Ansprüche,
**dadurch gekennzeichnet,**
**dass** die Informationen bezüglich der Verkehrssituation in der Umgebung des Fahrzeugs (1) über im Fahrzeug (1) angeordnete Sensoren (13; 15), über Mitteilungen von anderen Verkehrsteilnehmern und/oder über Mitteilungen von Verkehrs-Infrastruktureinrichtungen erfasst werden.

6. Scheinwerfersystem (10) für ein Fahrzeug (1), umfassend
- wenigstens einen Scheinwerfer (11, 12), dessen Lichtemission gemäß einem berechneten Lichtmuster (LM) steuerbar ist,
- eine Lichtverteilungserfassungseinheit (13), mittels der die Lichtverteilung (LVO - LV3) in der Umgebung des Fahrzeugs (1) erfassbar ist,
- eine mit der Lichtverteilungserfassungseinheit (13) verbundene Recheneinheit (18) zum Berechnen des von dem wenigstens einen Scheinwerfer (11, 12) zu emittierenden Lichtmusters (LM) zur Beleuchtung der Umgebung des Fahrzeugs (1) in Abhängigkeit von der erfassten Lichtverteilung (LVO - LV3) und
- eine mit der Recheneinheit (18) verbundene Steuereinheit (19) zum Steuern des wenigstens einen Scheinwerfers (11, 12) gemäß dem berechneten Lichtmuster (LM), wobei
- in der Umgebung des Fahrzeugs (1) eine inhomogene Lichtverteilung (LVO) mit Bereichen (B1 - B3) unterschiedlicher Lichtstärke erfassbar ist und
- das von dem wenigstens einen Scheinwerfer (11, 12) emittierte Lichtmuster (LM) ein Basis-Lichtmuster umfasst, mit welchem die Lichtverteilung (LV0') homogenisierbar ist, wobei eine Lichtemission des wenigstens einen Scheinwerfers (11, 12) in Richtung besonders schlecht ausgeleuchteter Bereiche im Umfeld des Fahrzeugs (1) erhöht wird und in Richtung stark reflektierender Bereiche erniedrigt wird,
- eine Verkehrssituationserfassungseinrichtung (14), mittels der Informationen bezüglich der Verkehrssituation in der Umgebung des Fahrzeugs (1) erfassbar sind,
**dadurch gekennzeichnet, dass**
- die zeitliche Entwicklung der Lichtverteilung (LVO - LV3) in der Umgebung des Fahrzeugs (1) und die Blickrichtung des Fahrers erfassbar ist und bei der Berechnung des Lichtmusters (LM) berücksichtigbar ist,
- mittels der Verkehrssituationserfassungseinrichtung (14)die Verkehrssituation einer Kritikalitätsklasse zuordenbar ist, und
- mittels der Steuereinheit (19) das von dem wenigstens einen Scheinwerfer (11, 12) zu emittierende Lichtmuster (LM) in Abhängigkeit von der zugeordneten Kritikalitätsklasse anpassbar ist,
- wobei das Scheinwerfersystem dazu konfiguriert ist, dass, wenn die Verkehrssituation einer hohen Kritikalitätsklasse zugeordnet wird, mit der eine erhöhte Verkehrsgefahr assoziiert wird, ein Zusatz-Lichtmuster berechnet wird, das dem Basis-Lichtmuster überlagert wird, wobei ein räumlich und/oder zeitlich inhomogenes Lichtmuster (LM) erzeugt wird, das in der Lichtverteilung (LV1 - LV3) eine bereichsweise und/oder zeitweise erhöhte Lichtstärke besitzt.

## Claims

1. Method for operating a headlight system (10) comprising at least one headlight (11, 12) in a vehicle (1), in which
- the light distribution (LVO) in the surroundings of the vehicle (1) is detected,
- the light pattern (LM) to be emitted by the at least one headlight (11, 12) for illuminating the surroundings of the vehicle (1) is calculated based on the detected light distribution (LVO), and
- the at least one headlight (11, 12) is controlled according to the calculated light pattern (LM),
- an inhomogeneous light distribution (LVO) having regions (B1 - B3) of different light intensity being detected in the surroundings of the vehicle (1),
- the light pattern (LM) emitted by the at least one headlight (11, 12) has a base light pattern by means of which the light distribution (LVO') is homogenized, a light emission of the at least one headlight (11, 12) being increased in the direction of particularly poorly illuminated regions in the surroundings of the vehicle (1) and being decreased in the direction of strongly reflective regions, and
- information regarding the traffic situation in the surroundings of the vehicle (1) is detected,
**characterized in that**
- the development over time of the light distribution (LVO - LV3) in the surroundings of the vehicle (1) and the viewing direction of the driver is detected and taken into account in the calculation of the light pattern (LM),
- the traffic situation is associated with a criticality class,
- the light pattern (LM) to be emitted by the at least one headlight (11, 12) is adapted based on the associated criticality class, and
- if the traffic situation is associated with a high criticality class, with which an increased traffic risk is associated, an additional light pattern is calculated that is superposed on the base light pattern, a spatially and/or temporally inhomogeneous light pattern (LM) being generated that has in the light distribution (LV1 - LV3) a light intensity that is increased in regions and/or temporarily.

2. Method according to claim 1,
**characterized in that**
the light intensity of the light pattern (LM) is changed at least for an angular range of the light emission at a repetition frequency in a range between 1 Hz and 10 Hz, preferably between 3 Hz and 5 Hz.

3. Method according to claim 1 or claim 2,
**characterized in that**
if another road user (2 - 7) is detected in the surroundings of the vehicle (1), the angular range of the light emission having increased light intensity is directed such that dazzling of the other road user (2 - 7) is prevented.

4. Method according to any of claims 1 to 3,
**characterized in that**
the traffic situation is associated with a high criticality class if information regarding an object (9) or another road user (4 - 7) is detected in the surroundings of the vehicle (1).

5. Method according to any of the preceding claims,
**characterized in that**
the information regarding the traffic situation in the surroundings of the vehicle (1) is detected via sensors (13; 15) arranged in the vehicle (1), by means of messages from other road users and/or by means of messages from traffic infrastructure devices.

6. Headlight system (10) for a vehicle (1), comprising:
- at least one headlight (11, 12), the light emission of which can be controlled according to a calculated light pattern (LM),
- a light distribution detection unit (13), by means of which the light distribution (LVO - LV3) in the surroundings of the vehicle (1) can be detected,
- a computing unit (18) connected to the light distribution detection unit (13) for calculating the light pattern (LM) to be emitted by the at least one headlight (11, 12) for illuminating the surroundings of the vehicle (1) based on the detected light distribution (LVO - LV3), and
- a control unit (19) connected to the computing unit (18) for controlling the at least one headlight (11, 12) according to the calculated light pattern (LM),
- an inhomogeneous light distribution (LVO) having regions (B1 - B3) of different light intensity being detectable in the surroundings of the vehicle (1), and
- the light pattern (LM) emitted by the at least one headlight (11, 12) has a base light pattern by means of which the light distribution (LV0') can be homogenized, a light emission of the at least one headlight (11, 12) being increased in the direction of particularly poorly illuminated regions in the surroundings of the vehicle (1) and being decreased in the direction of strongly reflective regions, and
- a traffic situation detection device (14), by means of which information regarding the traffic situation in the surroundings of the vehicle (1) can be detected,
**characterized in that**
- the development over time of the light distribution (LVO - LV3) in the surroundings of the vehicle (1) and the viewing direction of the driver can be detected and taken into account in the calculation of the light pattern (LM),
- the traffic situation can be associated with a criticality class by means of the traffic situation detection device (14), and
- the light pattern (LM) to be emitted by the at least one headlight (11, 12) can be adapted based on the associated criticality class by means of the control unit (19),
- the headlight system being configured such that, if the traffic situation is associated with a high criticality class, with which an increased traffic risk is associated, an additional light pattern is calculated that is superposed on the base light pattern, a spatially and/or temporally inhomogeneous light pattern (LM) being generated that has in the light distribution (LV1 - LV3) a light intensity that is increased in regions and/or temporarily.

## Revendications

1. Procédé pour l'exploitation d'un système de phares (10) comportant au moins un phare (11, 12) dans un véhicule (1), dans lequel
- la répartition de la lumière (LVO) est détectée dans l'environnement du véhicule (1),
- le motif de lumière (LM) à émettre par l'au moins un phare (11, 12) pour l'éclairage de l'environnement du véhicule (1) est calculé en fonction de la répartition de la lumière (LVO) détectée et
- l'au moins un phare (11, 12) est commandé conformément au motif de lumière (LM) calculé, dans lequel
- dans l'environnement du véhicule (1) une répartition de la lumière (LVO) non homogène avec des zones (B1 - B3) d'intensité de lumière différente est détectée,
- le motif de lumière (LM) émis par l'au moins un phare (11, 12) comprend un motif de lumière de base, avec lequel la répartition de la lumière (LVO') est homogénéisée, dans lequel une émission de lumière de l'au moins un phare (11, 12) est accrue en direction de zones particulièrement mal éclairée dans l'environnement du véhicule (1) et diminuée en direction de zones fortement réfléchissantes et
- des informations concernant la situation de circulation dans l'environnement du véhicule (1) sont détectées,
**caractérisé en ce que**
- l'évolution dans le temps de la répartition de la lumière (LVO - LV3) dans l'environnement du véhicule (1) et la direction de regard du conducteur sont détectées et sont prises en compte lors du calcul du motif de lumière (LM),
- la situation de circulation est attribuée à une classe de criticité,
- le motif de lumière (LM) à émettre par l'au moins un phare (11, 12) est adapté en fonction de la classe de criticité attribuée et,
- lorsque la situation de circulation est attribuée à une classe de criticité élevée, à laquelle un danger de circulation accru est associé, un motif de lumière supplémentaire est calculé, qui est superposé au motif de lumière de base, dans lequel un motif de lumière (LM) spatialement et/ou temporellement non homogène est créé, qui possède une intensité de lumière accrue par zones et/ou par moments dans la répartition de la lumière (LV1 - LV3).

2. Procédé selon la revendication 1,
**caractérisé en ce que**
l'intensité de lumière du motif de lumière (LM) est modifiée au moins pour une zone angulaire de la sortie de lumière avec une fréquence de répétition dans une plage entre 1 Hz et 10 Hz, de préférence entre 3 Hz et 5 Hz.

3. Procédé selon la revendication 1 ou 2,
**caractérisé en ce que,**
lorsqu'un autre usager de la route (2 - 7) est détecté dans l'environnement du véhicule (1), la plage angulaire de la sortie de lumière avec une intensité de lumière accrue est dirigée de manière à éviter un éblouissement de l'autre usager de la route (2 - 7).

4. Procédé selon l'une des revendications 1 à 3,
**caractérisé en ce que**
la situation de circulation est attribuée à une classe de criticité élevée, lorsque des informations concernant un objet (9) ou un autre usager de la route (4 - 7) sont détectées dans l'environnement du véhicule (1).

5. Procédé selon l'une quelconque des revendications précédentes,
**caractérisé en ce que**
les informations concernant la situation de circulation dans l'environnement du véhicule (1) sont détectées par l'intermédiaire de capteurs (13 ; 15) disposés dans le véhicule (1), par l'intermédiaire de notifications provenant d'autres usagers de la route et/ou par l'intermédiaire de notifications provenant d'installations d'infrastructures de la circulation.

6. Système de phares (10) pour un véhicule (1), comprenant
- au moins un phare (11, 12), dont l'émission de lumière peut être commandé conformément à un motif de lumière (LM) calculé,
- une unité de détection de répartition de la lumière (13), à l'aide laquelle la répartition de la lumière (LVO - LV3) peut être détectée dans l'environnement du véhicule (1),
- une unité de calcul (18) reliée à l'unité de détection de répartition de la lumière (13) pour le calcul du motif de lumière (LM) à émettre par l'au moins un phare (11, 12) pour l'éclairage de l'environnement du véhicule (1) en fonction de la répartition de la lumière (LVO - LV3) détectée et
- une unité de commande (19) reliée à l'unité de calcul (18) pour la commande de l'au moins un phare (11, 12) conformément au motif de lumière (LM) calculé, dans lequel
- dans l'environnement du véhicule (1) une répartition de la lumière (LVO) non homogène avec des zones (B1 - B3) d'intensité de lumière différente peut être détectée et
- le motif de lumière (LM) émis par l'au moins un phare (11, 12) comprend un motif de lumière de base, avec lequel la répartition de la lumière (LVO') peut être homogénéisée, dans lequel une émission de lumière de l'au moins un phare (11, 12) est accrue en direction de zones particulièrement mal éclairées dans l'environnement du véhicule (1) et diminuée en direction de zones fortement réfléchissantes,
- une unité de détection de situation de circulation (14), à l'aide laquelle des informations concernant la situation de circulation peuvent être détectées dans l'environnement du véhicule (1),
**caractérisé en ce que**
- l'évolution dans le temps de la répartition de la lumière (LVO - LV3) dans l'environnement du véhicule (1) et la direction de regard du conducteur peuvent être détectées et peuvent être prises en compte lors du calcul du motif de lumière (LM),
- à l'aide du dispositif de détection de situation de circulation (14) la situation de circulation peut être attribuée à une classe de criticité et
- à l'aide l'unité de commande (19), le motif de lumière (LM) à émettre par l'au moins un phare (11, 12) peut être adapté en fonction de la classe de criticité attribuée,
- dans lequel le système de phares est configuré de sorte que, lorsque la situation de circulation est attribuée à une classe de criticité élevée, à laquelle un danger de circulation accru est associé, un motif de lumière supplémentaire est calculé, qui est superposé au motif de lumière de base, dans lequel un motif de lumière (LM) spatialement et/ou temporellement non homogène est créé, qui possède une intensité de lumière accrue par zones et/ou par moments dans la répartition de la lumière (LV1 - LV3).
